# EUROPEAN PATENT SPECIFICATION

(11) **EP 3 184 376 B1**
(45) Date of publication and mention of the grant of the patent: **29.08.2018**
(21) Application number: 15201801.6
(22) Date of filing: 22.12.2015
(51) Int. Cl.: B60R 21/38

(54) **HINGE ARRANGEMENT**
SCHARNIERANORDNUNG
AGENCEMENT DE CHARNIÈRE

(43) Date of publication of application: 28.06.2017
(73) Proprietor: Volvo Car Corporation, 40 531 Göteborg (SE)
(72) Inventor: Tekin, Cihan, 42245 Hisings Backa (SE); Svensson, Jessica, 405 31 Göteborg (SE)
(74) Representative: Kransell & Wennborg KB

(56) References cited:
- EP-A1- 2 036 786
- DE-C1- 10 128 967

## Description

### TECHNICAL FIELD

The present disclosure relates to a hinge arrangement for a bonnet of a vehicle. The disclosure further relates to a bonnet arrangement comprising such a hinge arrangement and to a vehicle.

### BACKGROUND

If a motor vehicle, such as a car, is involved in an accident in which the front part of the vehicle hits a vulnerable road user, such as a pedestrian or a cyclist, it is not uncommon that the head of the vulnerable road user impacts on the bonnet of the vehicle. The vulnerable road user may in that case be severely injured. One parameter, which can affect the severity of the injury, is the fact that the bonnet, which is usually formed from a thin metal sheet, would tend to bend, and then deform on hard engine parts, such as an engine block, located in an engine compartment beneath the bonnet. In order to reduce the severity of these accidents, it is well-known to use a deployable bonnet. By displacing bonnet to a deployed position, also called a pop-up position, e.g. by raising at least its rear end, the distance between the bonnet and the hard engine parts is increased, and thereby the consequences of such an impact are mitigated.

The bonnet is in American English known as a hood, but herein the British English term bonnet is used.

Patent document DE 101 28 967 C1 discloses an automobile safety device for protecting a pedestrian upon frontal impact. The safety device provides automatic release of a bonnet for rearwards movement for absorbing impact energy. The displacement of the rear end of the bonnet is controlled by a slot in a carrier structure and an elongated opening in a link arm.

Patent document EP 2 036 786 A1 discloses a hood pop-up system for a vehicle that pops up a hood of the vehicle when a collision of the vehicle takes place according to the preamble of claim 1. The hood pop-up system includes: a hood pop-up unit, which pops up the hood positioned at a closed position and supports the popped-up hood at a hood support position that is higher than the closed position; and a hood pop-up restricting unit, which restricts upward movement of the popped-up hood at an uppermost pop-up position that is higher than the hood support position.
In a preferred embodiment, the hood pop-up system comprises a hood-hinge mechanism assembly located at an end portion of the hood. The hood-hinge mechanism includes: a base member; a first link, and a second link. The base member is fixed to the vehicle body. The first link is joined to the rear-end portion of the base member with a first pin, and extends frontwards from the joint to the rear-end portion of the base member. The first link thus attached is rotatable in the up-and-down direction around the first pin. The second link has one of its two ends joined to the front-end portion of the first link. A second pin is used at the joint, and allows the second link to move rotationally therearound. In addition, a bracket is attached to the bottom-side surface of the hood, and the second end of the second link is joined to the bracket with a third pin, which also allows the second link to move rotationally there around.

### SUMMARY

The object of the present disclosure is to overcome or ameliorate at least one of the disadvantages of the prior art, or to provide a useful alternative.

The object above may be achieved by the subject-matter of claim 1.

Thus, in a first aspect of the present invention there is provided a hinge arrangement adapted to be located at an end portion of a bonnet of a vehicle. The hinge arrangement has a longitudinal direction, a transverse direction and a vertical direction and is transitable between a normal state and a deployed state. The hinge arrangement comprises a hinge portion adapted to be attached, directly or indirectly, to a body of the vehicle, a bracket portion adapted to be attached, directly or indirectly, to the bonnet, and a deployment guiding element. The hinge portion comprises a first member, a second member and a hinge pivot axis providing a hinged connection between the first member and second member. The deployment guiding element comprises a first end pivotally connected to the bracket portion and a second end pivotally connected to the first member. The bracket portion is arranged to be in a fixed position relative to the first member during movement in the hinged connection. Further, the bracket portion is arranged to be translationally displaced as a whole at least in the vertical direction in relation to the first member of the hinge portion during the transition of the hinge arrangement between the normal state and the deployed state, the deployment guiding element being adapted to control the transition and the hinged connection being inactive during the transition. The hinge arrangement further comprises a lift limiter adapted to provide a displacement stop for the deployment guiding element when the hinge arrangement has reached the deployed state.

With a hinge arrangement as described herein, it is possible to decouple the movements occurring within the hinge arrangement during normal opening of the bonnet, i.e. the hinge arrangement being in its normal state, and the movements occurring within the hinge arrangement during the transition of the hinge arrangement from the normal state to the deployed state from each other, i.e. when the bonnet is displaced to its deployed position.

During normal opening of the bonnet, the deployment guiding element is inactive. However, it is active when the bonnet is displaced to its deployed position. When in the deployed state of the hinge arrangement as described herein, the characteristics of the deployment guiding element may be selected to obtain the desired behaviour of the hinge arrangement in case a head of a vulnerable road user would impact with the bonnet, e.g. that the hinge arrangement will collapse in a controllable way.

The bonnet is displaceable between a closed position and the deployed position. The closed position of the bonnet is the normal position of the bonnet, which for example is used when driving the vehicle or parking the vehicle. The bonnet then covers the engine compartment.

The deployed position of the bonnet is located at least upwards as compared to the closed position. When a sensor of the vehicle has indicated a collision with a vulnerable road user or an imminent collision with a vulnerable road user, the bonnet may be displaced to the deployed position, thereby increasing the distance between the bonnet and the hard engine parts, and hence the consequences of such a collision are mitigated. Preferably the deployed position is located upwards and rearwards as compared to the closed position, but it would also be possible to have a deployed position being straight upwards as compared to the closed position, or upwards and forwards. The directions, i.e. upwards, rearwards and forwards, are defined in relation to the body of the vehicle, assuming it is standing on a horizontal ground. The bonnet is preferably arranged such that when displacing it from the closed position to the deployed position, the bonnet moves simultaneously upwards and rearwards in a combined movement.

The upward movement direction of the bonnet corresponds to the above-mentioned vertical direction of the hinge arrangement, while the rearwards movement direction of the bonnet corresponds to the longitudinal direction of the hinge arrangement.

The bonnet may be arranged such that the deployed position of the bonnet permits partial access to the engine compartment, e.g. for filling a vehicular liquid, such as a washer fluid or a coolant. Thereby there is no need to open the bonnet to a fully open position for such tasks.

By displacing the bonnet to the deployed position at least upwards, preferably upwards and rearwards, the distance between the bonnet and the hard engine parts is increased, thereby reducing the severity of an accident involving a vulnerable road user impacting on the bonnet.

If the hinge arrangement as described herein is located at a rear end portion of the bonnet and hence operates on the rear end portion of the bonnet when deploying the bonnet, the bonnet may as an option also be adapted to raise a front end portion of the bonnet at least upwards, preferably upwards and rearwards. In that case, the whole bonnet is raised to reach the deployed position. The bonnet is then moved as a whole, although the actual displacements, e.g. given in millimetres, at the two end portions may differ. Raising the front end portion of the bonnet, or both end portions, may be advantageous in case the vulnerable road user hits a front portion of the bonnet, e.g. if the vulnerable road user is short, such as a child.

The hinge arrangement as described herein may, as an alternative or a complement, be located at a front end portion of the bonnet and hence operate on the front end portion when deploying the bonnet. In that case, the rear end portion may be deployable by means of its own lifting unit, such that the whole bonnet may be raised when in the deployed position.

The bonnet may also assume an open position. The open position permits access to the engine compartment of the vehicle e.g. for service, maintenance or repair work. In order to reach the open position, the bonnet is pivoted around the hinged connection with one or more hinge pivot axis/axes extending substantially in the transverse direction of the vehicle at or adjacent to the end portion of the bonnet. The open position of the bonnet arrangement as described herein can be reached without passing the deployed position.

The hinge portion of the hinge arrangement provides the hinged connection allowing normal opening of the bonnet, e.g. to the open position. The hinged connection may comprise a single hinge pivot axis, but it would also be feasible with a multi-link hinged connection comprising a plurality of hinge pivot axes and one or more link arms.

When the hinge arrangement as described herein is mounted in a vehicle, the first member of the hinge portion is more distal to the body of the vehicle than the hinged connection, i.e. the first member is situated further away from the point of attachment of the hinge arrangement to the body of the vehicle than the hinged connection. The first member is thus connected via the hinged connection, the second member and possibly other components to the body of the vehicle.

When the hinge arrangement as described herein is mounted in a vehicle, the second member of the hinge portion is more proximal to the body of the vehicle than the hinged connection, i.e. the second member is situated closer to the point of attachment of the hinge arrangement to the body than the hinged connection, e.g. the second member being directly attached to the body of the vehicle.

The bracket portion as a whole is arranged to be translationally displaced at least in the vertical direction of the hinge arrangement, i.e. upwards in relation to the vehicle, in relation to the first member of the hinge portion during the transition of the hinge arrangement between the normal state and the deployed state. Preferably the bracket portion is translationally displaced both in the vertical and longitudinal directions, i.e. upwards and rearwards in relation to the vehicle, e.g. following an arc of a circle, but it would also be possible to displace it straight upwards, or upwards and forwards in relation to the vehicle. The transition of the hinge arrangement as described herein is controlled by the deployment guiding element, e.g. the deployment guiding element is adapted to guide the movement of the bracket portion in relation to the hinge portion, in particular in relation to its first member. As a comparison, in the hinge arrangement of DE 101 28 967 C1 the transition of the hinge arrangement is controlled by a slot in a carrier structure and an elongated opening in a link arm, and there is no component corresponding to the deployment guiding element.

The deployment guiding element may be directly or indirectly connected to the bracket portion and to the first member of the hinge portion. Preferably a single deployment guiding element is used in the hinge arrangement as described herein. The deployment guiding element comprises a first end pivotally connected to the bracket portion, e.g. at a second pivot axis, and a second end pivotally connected to the first member, e.g. at a third pivot axis. Hence, the deployment guiding element is configured to pivot at the second and third pivot axes to provide the translational displacement of the bracket portion in relation to the first member. The second pivot axis may be located at a half of the bracket portion being furthest away from the hinged connection. The third pivot axis may be located in a centre portion of the first member.

The deployment guiding element may be configured to substantially deform in a plane extending in the longitudinal direction and the vertical direction of the hinge arrangement. Preferably the deployment guiding element is configured to deform in the plane only, e.g. by bending and/or buckling in the plane. The plane extends in the longitudinal and vertical directions of the hinge arrangement, such that both of these directions lie in that plane and the transverse direction is perpendicular to that plane. By this configuration of the hinge arrangement, deformation in the transverse direction of the hinge arrangement is avoided or substantially avoided. Hence, the deployment guiding element may substantially deform in the space between the first member of the hinge portion and the bracket portion, e.g. by bending in the available space. Thereby the head injury risk is reduced, e.g. as determined by HIC values. Further, the service cost may be reduced.

The deployment guiding element may comprise a first edge portion facing upwards, when the bonnet is in the closed position, and facing rearwards, when the bonnet is in the deployed position. The lift limiter may be adapted to act on the first edge portion of the deployment guiding element. There may also be a corresponding second edge portion facing downwards when the bonnet is in the closed position and forwards when the bonnet is in the deployed position.

The first member of the hinge portion may comprise a support member, e.g. a flange, constituting or being comprised in the lift limiter. The support member may be adapted to provide an abutment for the bracket portion in the normal state of the hinge arrangement. The support member may protrude from a main portion of the first member in the transverse direction, i.e. in a direction towards the deployment guiding element. The support member provides a displacement stop for the deployment guiding element, when the hinge arrangement has reached the deployed state. The support member may be adapted to act on the first edge portion of the deployment guiding element. Purely as an example, when the deployment guiding element has rotated so far in the third pivot axis that the deployment guiding element reaches the support member, the deployment guiding element cannot rotate any further, the support member thereby constituting the lift limiter.

As an alternative to, or as a complement to the support member constituting or being comprised in the lift limiter, the lift limiter may constitute or comprise a catch member being pivotally attached to the first member of the hinge portion, e.g. by a fourth pivot axis.

The catch member comprises an abutment member for the deployment guiding element, the abutment member providing the displacement stop for the deployment guiding element. The abutment member may protrude from a main portion of the catch member in the transverse direction of the hinge arrangement, i.e. in a direction towards the first member of the hinge arrangement. Preferably, the abutment member acts on the first edge portion of the deployment guiding element. The catch member, and hence the abutment member may be biased to abutment with the deployment guiding element, e.g. by a spring member. The abutment member may be a separate component attached to the rest of the catch member. As an alternative, the abutment member may be constituted by a portion of the catch member.

The hinge arrangement may further comprise a base portion attached to the second member of the hinge portion or constituting a part of the second member, the base portion comprising a stop member. The base portion protrudes upwards in the vertical direction from the second member or from the rest of the second member. The catch member may comprise a first branch being adapted to cooperate with the stop member, e.g. a portion of the first branch being shaped as a hook. The stop member may be adapted to prevent the catch member from further rotation around the fourth pivot axis by hindering any further motion of the first branch when it has reached the stop member. The stop member may be located at a location making it possible for the optional hook-shaped portion of the catch member to grip around the stop member. The stop member may be a separate component attached to the rest of the base portion. As an alternative, the stop member may be constituted by a portion of the base portion, e.g. by bending a top portion of the base portion inwards. The first branch may have a shape adapted for cooperation with the stop member, e.g. a portion of the first branch being shaped as a hook. They may also be adapted to cooperate in other ways, e.g. a pin, preferably spring-biased, of the base portion entering an opening in the catch member, or vice versa. In that case, the pin may constitute the stop member.

The catch member may comprise a second branch, the above-mentioned abutment member for the deployment guiding element being located at the second branch. The catch member and the base portion may constitute or be comprised in a first locking unit having a locked state and an open state. In the locked state, the first locking unit is adapted to lock the first member of the hinge portion in relation to the second member of the hinge portion, i.e. their positions in relation to each other are fixed, e.g. by the optional hook-shaped portion of the catch member gripping around the stop member or the above-mentioned pin. In the open state, the first locking unit allows opening of the bonnet. The catch member may be biased to the open state, e.g. by the spring member mentioned above.

In the deployed state of the hinge arrangement, the catch member is in the locked state, wherein the first member is locked in relation to the second member of the hinge arrangement, i.e. their positions in relation to each other are fixed, such that no pivotal movement at the hinged connection of the hinge arrangement is allowed. The catch member may grip around the stop member with its hook shape, such that the first member is in a fixed position in relation to the second member.

During transition of the hinge arrangement from the normal state to the deployed state, the deployment guiding element may move the abutment member by pivoting the catch member around the fourth pivot axis. In that case, the first branch of the catch member will reach the stop member of the base portion, thereby being in the locked state. Thereafter, the catch member cannot rotate any further around the fourth pivot axis.

In the locked state of the catch member, the abutment member provides a displacement stop for the deployment guiding element, such the deployment guiding element cannot pivot any further around the third pivot axis. This occurs when the hinge arrangement has reached the desired deployed state and thereby the bonnet has reached the desired deployed position. The catch member then acts as a lift limiter, limiting further movement of the deployment guiding element and hence limiting further movement of the bonnet.

The configuration of the second branch, and in particular the relative position of the abutment member, is preferably adapted to the configuration of the deployment guiding element, e.g. to if it has a curved or a straight shape.

As described herein, the catch member may have a dual function, both a locking function, as being comprised in the first locking unit, and a displacement stop function for the deployment guiding element. The locking function of the first locking unit may be provided by the first branch. The displacement stop function for the deployment guiding element may be provided by the second branch combined with the first branch being stopped by the stop member.

Normally the catch member obtains the locking function before obtaining the displacement stop function during the transition from the normal state to the deployed state, such that the first member is locked in relation to the second member of the hinge arrangement during at least the later part of the transition, e.g. during the last quarter of the transition, during the second half of the transition or during the last three quarters of the transition.

Instead of a single member providing both a locking function and a displacement stop function, as for the catch member described herein, it would also be possible to use two or more separate components for these two functions.

As mentioned above, the displacement stop function may, as an alternative or as a complement, be provided by the support member comprised in the first member of the hinge portion.

The first branch of the catch member may have an arbitrary shape, e.g. a straight shape, as long as the first branch is adapted to cooperate with the stop member in order to stop any further rotation of the catch member in order to provide the displacement stop. The hook shape of the catch member described herein is an option, which may be advantageous in order to provide the locking function.

The hinge arrangement may comprise a second locking unit, having a locked state and an open state and being adapted to lock the bracket portion in relation to the first member of the hinge portion. In the locked state, the second locking unit locks the bracket portion in relation to the first member of the hinge portion. In the open state, the second locking unit allows translational displacement of the bracket portion at least in the vertical direction of the hinge arrangement, preferably in the vertical and longitudinal directions of the hinge arrangement.

The second locking unit is in its locked state during normal opening of the bonnet. Further, the second locking unit is in its open state during the transition of the hinge arrangement between its normal state and its deployed state.

The second locking unit may comprise a hook and a catch. The hook may be tensioned, e.g. by a spring, such that it is biased to the locked state. In the open state, the spring is tensioned such that the hook moves out of grip. The bracket portion is then displaceable in relation to the first member, thus allowing the transition of the hinge arrangement between its normal state and its deployed state. The hook may be located at the bracket portion and the catch at the first member, but they may also be located in the opposite way. A portion of the first member, or the bracket portion if applicable, may be utilized as the catch. The hook may be pivotable around one of the second or third pivot axes in order to change its state between its closed and its open state.

Other kinds of second locking units are feasible, such as a spring-loaded pin attached to one of the bracket portion or the first member and going through an opening in the other of the bracket portion or the first member, which pin may be pulled out from the opening to assume the open state allowing pivotal movement at the hinged connection between the bracket portion and the first member.

The hinge arrangement may comprise a lifting member adapted to directly or indirectly operate on the bracket portion, thereby providing the translational displacement of the bracket portion at least in the vertical direction of the hinge arrangement, preferably in the vertical and longitudinal directions of the hinge arrangement, during the transition of the hinge arrangement between the normal state and the deployed state.

The lifting member may be a piston released by pyrotechnics. The bracket portion may comprise an abutment adapted for the lifting member to push on, e.g. by having an abutment surface perpendicular to the axial direction of the piston.

The lifting member may be adapted to operate on the second locking unit, such that the second locking unit is changed from its locked state to its open state by the lifting member. The lifting member may e.g. push the bracket portion via pushing on the second locking unit.

In a second aspect of the present invention, there is provided a bonnet arrangement for a vehicle, the bonnet arrangement comprising a bonnet being displaceable between a closed position and a deployed position located at least upwards, preferably upwards and rearwards, as compared to the closed position, and a hinge arrangement as described herein. The bracket portion of the hinge arrangement is attached, directly or indirectly, to the bonnet.

The rear end portion of the bonnet may be adapted to be displaced rearwards by a longitudinal distance dₓᵣ being in the range of 0 < dₓᵣ ≤ 70 mm, preferably 10 mm ≤ dₓᵣ ≤ 40 mm in relation to the body of the vehicle during the displacement from the closed position to the deployed position. Further, the rear end portion may be adapted to be displaced upwards by a vertical distance d_{zr} being in the range of 0 < d_{zr} ≤ 150 mm, preferably 50 mm ≤ d_{zr} ≤ 100 mm in relation to the body of the vehicle during the displacement from the closed position to the deployed position. The distances dₓᵣ and d_{zr} are determined at the location where the hinge arrangement is attached to the bonnet.

Thereby, it is possible to provide a large enough gap in the deployed position between the bonnet and any hard engine parts. Further, in the case of providing partial access to the engine compartment, there will be enough room to fill the vehicular liquid.

In a third aspect of the present invention, there is provided a vehicle comprising a hinge arrangement as described herein or a bonnet arrangement as described herein.

### BRIEF DESCRIPTION OF THE DRAWINGS

The present invention will hereinafter be further explained by means of non-limiting examples with reference to the appended drawings wherein:
- Fig. 1: is a schematic side view of a bonnet arrangement according to the invention, showing a bonnet in a closed, an open and a deployed position, respectively,
- Fig. 2: illustrates a hinge arrangement of the bonnet arrangement of Figure 1 in a normal state,
- Fig. 3: illustrates a detail of the hinge arrangement of Figure 2 in a perspective view,
- Fig. 4: illustrates the hinge arrangement of Figure 2 in a deployed state,
- Fig. 5: illustrates the hinge arrangement of Figure 2 during opening of the bonnet.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. Details from two or more of the embodiments may be combined with each other.

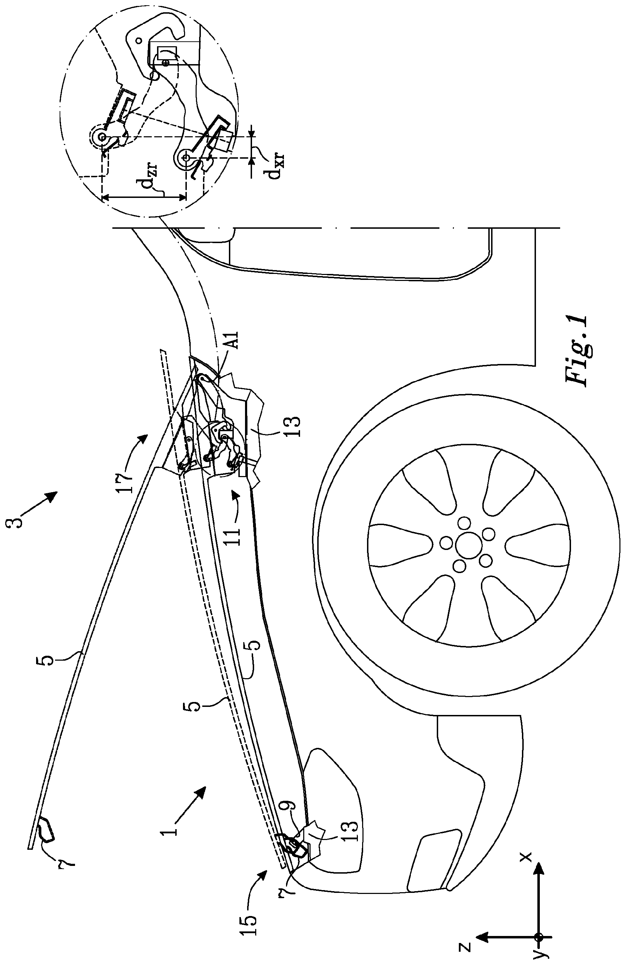

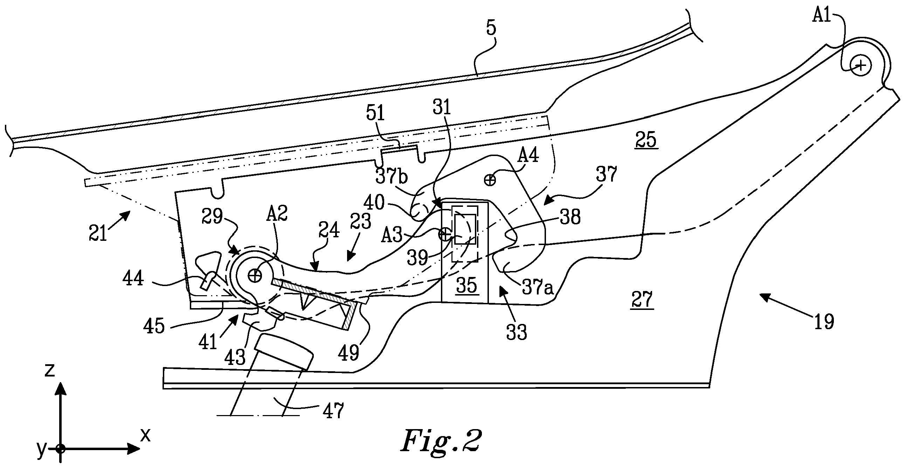

Figure 1 schematically illustrates a bonnet arrangement 1 of a vehicle 3 according to the invention. The vehicle in this case is a car. The bonnet arrangement 1 comprises a bonnet 5, a striker 7, a latch 9 and a hinge arrangement 11. The bonnet 5 is connected to a body 13 of the vehicle 3 by the striker 7 and the latch 9 at a front end portion 15 of the bonnet 5, and by the hinge arrangement 11 at a rear end portion 17 of the bonnet 5. The hinge arrangement 11 will be further described below in conjunction with Figures 2-5.

The bonnet 5 is shown in a closed position, see continuous line, in a deployed position, see dashed line, and in an open position, see dotted line.

The closed position of the bonnet 5 is used during normal driving of the vehicle 3 and during parking of the vehicle 3.

The open position of the bonnet 5, as indicated by the dotted line in Figure 1, permits access to the engine compartment, e.g. for service, maintenance or repair work. In order to reach the open position, the bonnet 5 is pivoted at or adjacent to its rear end portion 17 by means of the hinge arrangement 11. The bonnet 5 is then displaced directly from the closed position to the open position without passing the deployed position. When closing the bonnet 5 again from the open position, the opening displacement may be reversed.

The bonnet 5 is also displaceable from the closed position to the deployed position. As already mentioned above in the background section, it is well-known to use a deployable bonnet in a vehicle. By raising the bonnet 5 to the deployed position, also called the pop-up position, the distance between the bonnet 5 and any hard engine parts is increased, thereby reducing the severity of an accident involving a vulnerable road user being thrown onto the bonnet. As an option, which is illustrated in Figure 1, the bonnet arrangement 1 of the invention may also raise the front end portion 15 of the bonnet 5 in order to reach the deployed position. This may be advantageous if the vulnerable road user hits a front portion of the bonnet 5, which e.g. may be the case, if the vulnerable road user is short, e.g. a child.

When being displaced from its closed position to its deployed position, the bonnet 5 of the illustrated embodiment moves simultaneously upwards in the z-direction and rearwards in the x-direction. Not only the rear end portion 17, but also the front end portion 15, is displaced upwards and rearwards. Preferably, the bonnet 5 is also displaceable from the deployed position back to the closed position, such that the bonnet arrangement 1 may be restored to the closed position after the deployed position has been activated.

The rear end portion 17 of the bonnet 5 may be adapted to be displaced rearwards by a longitudinal distance dₓᵣ in the range of 0 < dₓᵣ ≤ 70 mm, preferably 10 mm ≤ dₓᵣ ≤ 40 mm in relation to the body 13 of the vehicle 3 during the displacement from the closed position to the deployed position. Further, the rear end portion 17 may be adapted to be displaced upwards by a vertical distance d_{zr} being in the range of 0 < d_{zr} ≤ 150 mm, preferably 50 mm ≤ d_{zr} ≤ 100 mm in relation to the body 13 of the vehicle 3 during the displacement from the closed position to the deployed position. The distances dₓᵣ and d_{zr} are determined at the location where the hinge arrangement 11 is attached to the bonnet 5.

When the bonnet 5 is in the deployed position, there is partial access to the engine compartment. Thereby it is possible to e.g. fill vehicular liquids, such as a washer fluid or a coolant, without having to open the bonnet 5 to the open position.

One pair of a striker 7 and a latch 9 may be used. In that case, the pair is preferably located at or adjacent to the centre of the front end portion 15 of the bonnet 5. Often, there is one pair of a striker 7 and a latch 9 at or adjacent to each lateral side of the front end portion 15 of the bonnet 5.

Usually, there is one hinge arrangement 11 at or adjacent to each lateral side of the rear end portion 17 of the bonnet 5. However, one, two, three or more hinge arrangements may be used.

The directionality of the hinge arrangement 11 corresponds to the directionality of the vehicle 3, such that a longitudinal direction x of the hinge arrangement 11 corresponds to a longitudinal direction of the vehicle 3, a transverse direction y of the hinge arrangement 11 corresponds to a transverse direction of the vehicle 3 and a vertical direction z of the hinge arrangement 11 corresponds to a vertical direction of the vehicle 3, assuming the vehicle is standing on a horizontal ground.

In the embodiment of Figure 1, the striker 7 is attached to the bonnet 5, while the latch 9 is attached to the body 13 of the vehicle 3. As an alternative, not illustrated, the striker 7 may be attached to the body 13 of the vehicle 3 and the latch 9 to the bonnet 5. In any case, the striker 7 and the latch 9 are located such that they can cooperate with each other, when the bonnet 5 is in the closed position and the deployed position, respectively.

As an alternative to displacing both the front end portion 15 and the rear end portion 17 when going to the deployed position of the bonnet 5, the front end portion 15 may remain in a relative position similar to that of the closed position of the bonnet 5, while only displacing the rear end portion 17.

Figures 2-5 illustrate an embodiment of a hinge arrangement 11 according to the invention. The illustrated embodiment is the hinge arrangement 11 at the rear end portion 17 of the bonnet 5 of Figure 1.

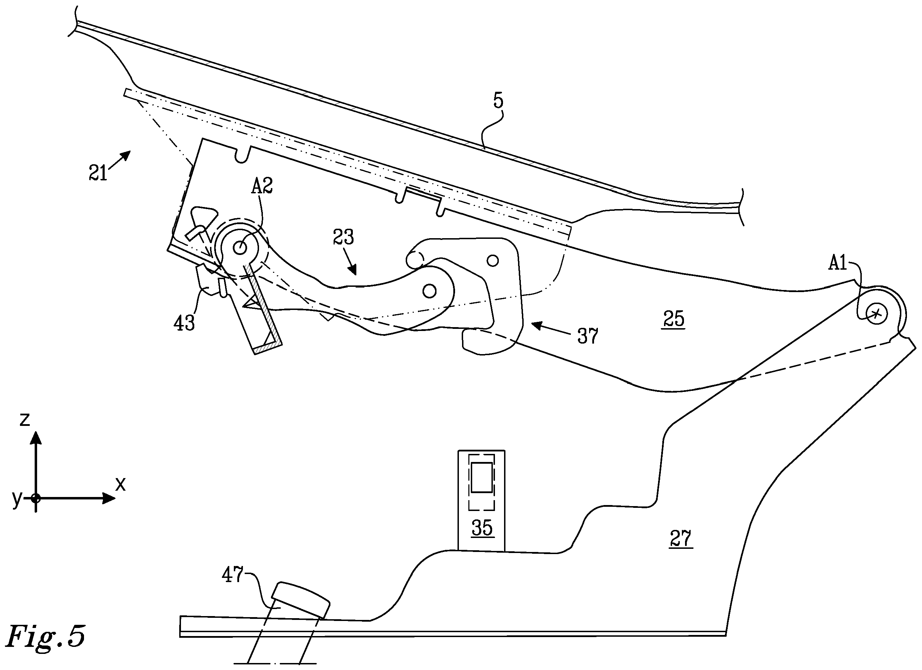

The hinge arrangement 11 comprises a hinge portion 19 adapted to be directly or indirectly attached to the body 13 of the vehicle 3, a bracket portion 21 adapted to be directly or indirectly attached to the bonnet 5 and a deployment guiding element 23. In Figures 2 and 5, the bracket portion 21 is indicated with a point-dashed line to improve visibility.

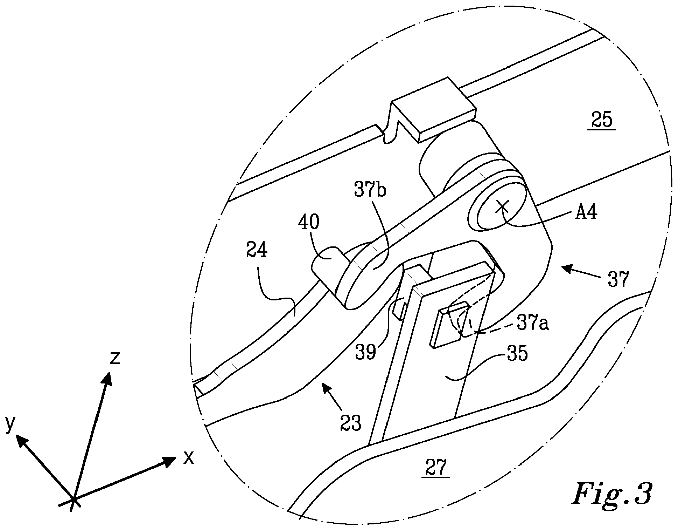

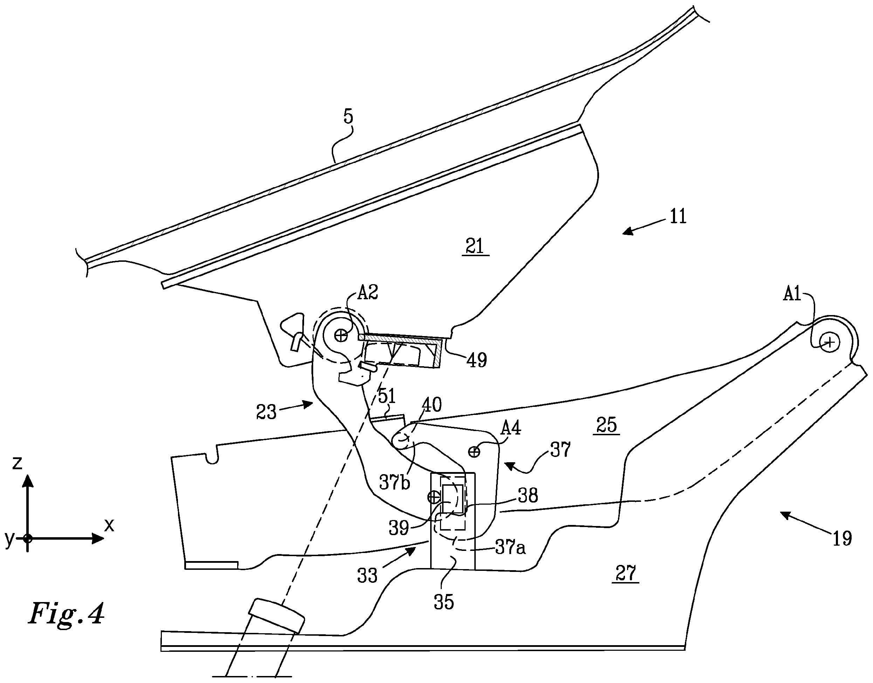

The hinge arrangement 11 is transitable between a normal state, illustrated in Figures 2 and 3, corresponding to the bonnet 5 being in the closed position, and a deployed state, illustrated in Figure 4, corresponding to the bonnet 5 being in the deployed position. In the open position of the bonnet 5 and during transition between the closed position and the open position of the bonnet 5, as is illustrated in Figure 5, the hinge arrangement 11 is in its normal state.

The hinge portion 19 comprises one or more hinge pivot axes providing a hinged connection between the bonnet 5 and the body 13 of the vehicle 3 allowing normal opening of the bonnet 5 for maintenance, service and repair. In the illustrated embodiment, the hinge arrangement 11 comprises a single hinge pivot axis A1, but it would also be feasible with a multi-link hinged connection comprising a plurality of pivot axes. The hinge portion 19 comprises a first member 25 being more distal to the body 13 than the hinged connection, and a second member 27 being less distal, i.e. more proximal, to the body 13 than the hinged connection. In the illustrated embodiment, the first member 25 is pivotally connected to the second member 27 by the hinge pivot axis A1, such that the hinge pivot axis A1 provides the hinged connection. However, for a multi-link hinged connection, there may be other portions or elements, such as link arms, located between the first member 25 and the second member 27.

The deployment guiding element 23 is adapted to control the transition of the hinge arrangement 11 between the normal state and the deployed state. In the illustrated embodiment, the deployment guiding element 23 comprises an arm with a curved shape, illustrated as a crescent shape, having a first end 29 pivotally connected at a second pivot axis A2 to the bracket portion 21 and a second end 31 pivotally connected at a third pivot axis A3 to the first member 25 of the hinge portion 23. The deployment guiding element 23 is located in a space between the first member 25 of the hinge portion 19 and the bracket portion 21.

The deployment guiding element 23 comprises a first edge portion 24 facing upwards when the bonnet is in the closed position, as in Figure 2, and rearwards when the bonnet is in the deployed position, as in Figure 4. There is also a corresponding second edge portion facing downwards when the bonnet is in the closed position and forwards when the bonnet is in the deployed position.

The hinge portion 19 comprises a first locking unit 33, which may assume a locked state, as is illustrated in Figure 4, or an open state, as is illustrated in Figures 2, 3 and 5. In the locked state of the first locking unit 33, the first member 25 is locked in relation to the second member 27 of the hinge arrangement 11, i.e. their positions in relation to each other are fixed. When the hinge arrangement 11 is transited to its deployed state, the first locking unit 33 will be in its locked state during at least the later part of the transition, such that there is no pivotal movement at the hinged connection A1 of the hinge arrangement 11 during displacement of the bonnet 5 to the deployed position.

The first locking unit 33 comprises a base portion 35 fixedly connected to the second member 27, or forming a part thereof, and a catch member 37 pivotally connected to the first member 25 by a fourth pivot axis A4. The catch member 37 comprises a first branch 37a and a second branch 37b. In the illustrated embodiment, a portion of the first branch 37a is shaped like a hook 38. The catch member 37 may be biased to the open state, e.g. by a spring member, which is not illustrated.

A stop member 39 is attached to the base portion 35, which is most easily seen in the perspective view of Figure 3. The stop member 39 is adapted to prevent the catch member 37 from further rotation around the fourth pivot axis A4 by hindering any further motion of the first branch 37a, when it has reached the stop member 39, which is further described below in conjunction with Figure 4. In the illustrated embodiment, the stop member 39 is located at a location making it possible for the hook 38 to grip around the stop member 39.

As an alternative, the stop member may form a part of the base portion 35, e.g. bending the base portion 35, such that it protrudes inwards.

The second branch 37b of the catch member 37 comprises an abutment member 40, which is adapted to provide abutment for the deployment guiding element 23, which is most easily seen in Figure 3. The abutment member 40 protrudes in the transverse direction y of the hinge arrangement, i.e. in a direction towards the first member 25. Preferably, the abutment member 40 acts on the first edge portion 24 of the deployment guiding element 23, as illustrated in Figure 3. The catch member 37, and hence the abutment member 40 may be biased to abutment with the deployment guiding element 23, e.g. by the spring member mentioned above, which is not illustrated.

The hinge arrangement 11 comprises a second locking unit 41, which may assume a locked state, as is illustrated in Figures 2, 3 and 5, or an open state, as is illustrated in Figure 4. In the locked state of the second locking unit 41, the bracket portion 21 is locked in relation to the first member 25 of the hinge portion 19. In the open state of the second locking unit 41, the bracket portion 21 as a whole is allowed to move in relation to the first member 25 of the hinge portion 19. This movement is controlled by the deployment guiding element 23. In the illustrated embodiment, the second locking unit 41 comprises a hook 43 attached to the bracket portion 21, which hook 43 is adapted to grip around a catch 45 of the first member 25 of the hinge portion 19. The hook 43 is attached to the bracket portion 21 by the second pivot axis A2 and is pivotable around that axis A2, such that the hook 43 can be moved out of grip of the catch 45. The second locking unit 41 may be biased to its locked state, e.g. by the hook 43 being tensioned by a spring 44.

In order to be able to transit the hinge arrangement 11 to its deployed state, thereby also displacing the bonnet 5 to its deployed position, the hinge arrangement 11 comprises a lifting member 47, e.g. a piston, which may be released by e.g. pyrotechnics. The bracket portion 21 comprises an abutment 49. When the lifting member 47 directly or indirectly acts on the abutment 49, the bracket portion 21 is displaced upwards and rearwards in a displacement governed by the deployment guiding element 23. See Figure 4.

When the lifting member 47 is activated, e.g. when a sensor of the vehicle 3 has indicated a collision with a vulnerable road user or an imminent collision with a vulnerable road user, the lifting member 47 initially operates on the second locking unit 41, such that the second locking unit 41 is changed to its open state. In the illustrated embodiment, the lifting member 47 moves the hook 43 out of way of the catch 45 by pivoting the hook 43 around the second pivot axis A2. Thereafter the bracket portion 21 is free to move as a whole in relation to the hinge portion 19, in particular in relation to the first member 25 of the hinge portion 19. The lifting member 47 then acts on the abutment 49 of the hook 43, thereby displacing the bracket portion 21. As an alternative, the lifting member 47 may act directly on the bracket portion 21.

The bracket portion 21 is translationally displaced upwards and rearwards in relation to the hinge portion 19 by a movement governed by the deployment guiding element 23 in order to reach the deployed state of the hinge arrangement. In the illustrated embodiment, the movement follows an arc of a circle. During the displacement, the bracket portion 21 has no direct connection to the hinge portion 19. Instead they are indirectly connected via the deployment guiding element 23. The hinge portion 19 remains in its normal state, which is the state also corresponding to a closed bonnet 5. There is then no relative movement within the hinge portion 19 and the hinged connection, illustrated as the hinge pivot axis A1, is inactive. Hence, the relative movement within the hinge arrangement 11 during the transition of the hinge arrangement 11 to the deployed state and the relative movement within the hinge arrangement 11 during normal opening of the bonnet 5 are decoupled from each other.

The first member 25 of the hinge portion 19 comprises a support member, e.g. a flange 51 protruding in the transverse direction y in a direction towards the deployment guiding element 23. The flange 51 is adapted to provide an abutment for the bracket portion 21 in the normal state of the hinge arrangement 11, as indicated in Figure 2.

Figure 4 illustrates the hinge arrangement 11 in its deployed state. In comparison to Figures 2 and 3, the deployment guiding element 23 has pivoted around the second and third pivot axes A2, A3, such that the bonnet 5 assumes its deployed position.

In the deployed state of the hinge arrangement 11, as illustrated in Figure 4, the catch member 37 is in a locked state, wherein the first member 25 is locked in relation to the second member 27 of the hinge arrangement 11, i.e. their positions in relation to each other are fixed, such that no pivotal movement at the hinged connection A1 of the hinge arrangement 11 is allowed. The catch member 37 grips around the stop member 39 with its hook shape 38, such that the first member 25 is in a fixed position in relation to the second member 27.

During transition of the hinge arrangement 11 from the normal state, as in Figures 2-3, to the deployed state, as in Figure 4, the deployment guiding element 23 moves the abutment member 40 by pivoting the catch member 37 around the fourth pivot axis A4. Finally, the first branch 37a of the catch member 37 reaches the stop member 39. Thereafter, the catch member 37 cannot rotate any further around the fourth pivot axis A4. The abutment member 40 then provides a displacement stop for the deployment guiding element 23, such the deployment guiding element 23 cannot pivot any further around the third pivot axis A3. This occurs when the hinge arrangement 11 has reached the desired deployed state and thereby the bonnet 5 has reached the desired deployed position. The catch member 37 therefore acts as a lift limiter, limiting further movement of the deployment guiding element 23 and hence limiting further movement of the bonnet 5.

The configuration of the second branch 37b and in particular the relative position of the abutment member 40 is preferably adapted to the configuration of the deployment guiding element 23. The illustrated embodiment shows a curved shape of the deployment guiding element 23. Purely as an example, if the deployment guiding element 23 instead would have been straight, the second branch of the catch member could have a shorter extension from the fourth pivot axis A4 in order to provide the desired abutment for the deployment guiding element 23.

In the illustrated embodiment, the catch member 37 has a dual function, both as being comprised in the first locking unit 33 and as the displacement stop for the deployment guiding element 23. The locking function of the first locking unit 33 is provided by the first branch 37a and the function of the displacement stop for the deployment guiding element 23 is provided by the second branch 37b combined with the first branch 37a being stopped by the stop member 39.

Normally the catch member 37 obtains the locking function before obtaining the displacement stop function during the transition from the normal state to the deployed state, such that the first member 25 is locked in relation to the second member 27 of the hinge arrangement 11 during at least the later part of the transition, e.g. during the last quarter of the transition, during the second half of the transition or during the last three quarters of the transition.

Instead of a single member providing both a locking function and a displacement stop function, as in the illustrated embodiment, it would also be possible to use two or more separate components for these two functions.

The first branch 37a may have an arbitrary shape, e.g. a straight shape, as long as the first branch 37a is adapted to cooperate with the stop member 39 in order to stop any further rotation of the catch member 37 in order to provide the displacement stop. The hook shape of the catch member 37 in the illustrated embodiment is an option, which is advantageous in order to provide the locking function.

The support member comprised the first member 25, illustrated as the flange 51, provides an additional displacement stop for the deployment guiding element 23 in the illustrated embodiment. The support member 51 is adapted to act on the first edge portion 24 of the deployment guiding element 23. When the deployment guiding element 23 has rotated so far in the third pivot axis A3 that it reaches the flange 51, the deployment guiding element 23 cannot rotate further.

Although, the illustrated embodiment discloses two different displacement stops for the deployment guiding element 23, i.e. the abutment member 40 of the catch member 37 and the support member 51 comprised in the first member 25, it would also be feasible to only use one of the displacement stops.

Figure 5 illustrates the hinge arrangement 11 during normal opening of the bonnet 5. The bonnet 5 is opened by rotation in the hinged connection. In the illustrated embodiment, the first member 25 of the hinge portion 19 is pivoted relative to the second member 27 at the hinge pivot axis A1 providing the hinged connection. The bracket portion 21 is meanwhile in a fixed position relative to the first member 25 of the hinge portion 19 during opening of the bonnet 5.

The first locking unit 33 is in its open state allowing normal opening of the bonnet 5. The hook 38 of the catch member 37 has been moved away from the stop member 39, i.e. the first locking unit 33 is in the open state, such that rotation in the hinged connection, illustrated as the hinge pivot axis A1, is possible.

In the illustrated embodiment, the bracket portion 21 is locked by the second locking unit 41 being in its locked state. The bracket portion 21 hence moves together with the first member 25 in the pivotal movement around the hinge pivot axis A1. The deployment guiding element 23 is inactive.

As such, the present invention should not be considered as limited by the embodiments and figures described herein. Rather, the full scope of the invention should be determined by the appended claims, with reference to the description and drawings.

In particular, the hinge arrangement may be located at the front end portion of the bonnet, although the embodiment of Figures 1-5 illustrates a location at the rear end portion of the bonnet.

## Claims

1. A hinge arrangement (11) adapted to be located at an end portion (15, 17) of a bonnet (5) of a vehicle (3),
said hinge arrangement (11) having a longitudinal direction (x), a transverse direction (y) and a vertical direction (z),
said hinge arrangement (11) being transitable between a normal state and a deployed state,
said hinge arrangement (11) comprising
- a hinge portion (19) adapted to be attached, directly or indirectly, to a body (13) of said vehicle (3),
- a bracket portion (21) adapted to be attached, directly or indirectly, to said bonnet (5), and
- a deployment guiding element (23),
said hinge portion (19) comprising a first member (25), a second member (27) and a hinge pivot axis (A1) providing a hinged connection between said first member (25) and said second member (27),
said deployment guiding element (23) comprising a first end (29) pivotally connected to said bracket portion (21) and a second end (31) pivotally connected to said first member (25),
said bracket portion (21) being arranged to be in a fixed position relative to said first member (25) during movement in said hinged connection (A1),
said hinge arrangement (11) further comprising a lift limiter (37, 51) adapted to provide a displacement stop for said deployment guiding element (23) when said hinge arrangement (11) has reached said deployed state.
**characterized in that**
said bracket portion (21) is arranged to be translationally displaced as a whole at least in said vertical direction in relation to said first member (25) of said hinge portion (19) during said transition of said hinge arrangement (11) between said normal state and said deployed state, said deployment guiding element (23) being adapted to control said transition and said hinged connection (A1) being inactive during said transition.

2. The hinge arrangement (11) according to claim 1, wherein said lift limiter (37, 51) acts on a first edge portion (24) of said deployment guiding element (23).

3. The hinge arrangement (11) according to any one of the preceding claims, wherein said first member (25) of said hinge portion (19) comprises a support member (51), e.g. a flange, constituting or being comprised in said lift limiter.

4. The hinge arrangement (11) according to claim 3, wherein said support member (51) of said first member (25) is adapted to provide an abutment for said bracket portion (21) in said normal state of said hinge arrangement (11).

5. The hinge arrangement (11) according to any one of the preceding claims, wherein said lift limiter constitutes or comprises a catch member (37) pivotally attached to said first member (25) of said hinge portion (19), said catch member (37) comprising an abutment member (40) for said deployment guiding element (23), said abutment member (40) providing said displacement stop for said deployment guiding element (23).

6. The hinge arrangement (11) according to claim 5 further comprising a base portion (35) attached to said second member (27) of said hinge portion (19) or constituting a part of said second member (27), said base portion (35) comprising a stop member (39), said catch member (37) comprising a first branch (37a) being adapted to cooperate with said stop member (39), e.g. a portion of said first branch (37a) being shaped as a hook (38).

7. The hinge arrangement (11) according to claim 5 or 6, wherein said catch member (37) comprises a second branch (37b), said abutment member (40) for said deployment guiding element (23) being located at said second branch (37b).

8. The hinge arrangement (11) according to claim 6, or claim 7 when dependent on claim 6, wherein said catch member (37) and said base portion (35) constitute or are comprised in a first locking unit (33) having a locked state and an open state and in said locked state being adapted to lock said first member (25) of said hinge portion (19) in relation to said second member (27) of said hinge portion (19).

9. The hinge arrangement (11) according to any one of the preceding claims comprising a second locking unit (41) having a locked state and an open state and being adapted to lock said bracket portion (21) in relation to said first member (25) of said hinge portion (19).

10. The hinge arrangement (11) according to any one of the preceding claims further comprising a lifting member (47) adapted to operate on said bracket portion (21), thereby providing said translational displacement at least in said vertical direction of said bracket portion (21) in relation to said first member (25) of said hinge portion (19) during said transition of said hinge arrangement (11) between said normal state and said deployed state.

11. The hinge arrangement (11) according to claim 10 when dependent on claim 9, said lifting member (47) being adapted to operate on said second locking unit (41), such that said second locking unit (41) is changed from said locked state to said open state by said lifting member (47).

12. A bonnet arrangement (1) for a vehicle (3), said bonnet arrangement (1) comprising
- a bonnet (5) being displaceable between a closed position and a deployed position located at least upwards as compared to said closed position, and
- a hinge arrangement (11) according to any one of the preceding claims,
said bracket portion (21) of said hinge arrangement (11) being attached, directly or indirectly, to said bonnet (5).

13. A vehicle comprising said hinge arrangement (11) according to any one of claims 1-11 or said bonnet arrangement according to claim 12.

## Patentansprüche

1. Scharnieranordnung (11), die geeignet ist, an einem Endabschnitt (15, 17) einer Kühlerhaube (5) eines Fahrzeugs (3) gelegen zu sein,
wobei die Scharnieranordnung (11) eine Längsrichtung (x), eine Querrichtung (y) und eine vertikale Richtung (z) aufweist,
wobei die Scharnieranordnung (11) zwischen einem normalen Zustand und einem genutzten Zustand überführbar ist,
wobei die Scharnieranordnung (11) Folgendes umfasst:
- einen Scharnierabschnitt (19), der geeignet ist, direkt oder indirekt an einem Aufbau (13) des Fahrzeugs (3) angebracht zu werden,
- einen Halterungsabschnitt (21), der geeignet ist, direkt oder indirekt an der Kühlerhaube (5) angebracht zu werden, und
- ein Nutzungsführungselement (23),
wobei der Scharnierabschnitt (19) ein erstes Element (25), ein zweites Element (27) und eine Scharnierdrehachse (A1) umfasst, die eine gelenkige Verbindung zwischen dem ersten Element (25) und dem zweiten Element (27) bereitstellt,
wobei das Nutzungsführungselement (23) ein erstes drehbar mit dem Halterungsabschnitt (21) verbundenes Ende (29) und ein zweites drehbar mit dem ersten Element (25) verbundenes Ende (31) umfasst,
wobei der Halterungsabschnitt (21) so angeordnet ist, dass er sich während der Bewegung in der gelenkigen Verbindung (A1) in einer festen Stellung relativ zu dem ersten Element (25) befindet,
wobei die Scharnieranordnung (11) ferner einen Hubbegrenzer (37, 51) umfasst, der geeignet ist, einen Verschiebungsanschlag für das Nutzungsführungselement (23) bereitzustellen, wenn die Scharnieranordnung (11) den genutzten Zustand erreicht hat,
**dadurch gekennzeichnet, dass**
der Halterungsabschnitt (21) so angeordnet ist, dass er im Ganzen wenigstens in der vertikalen Richtung in Bezug auf das erste Element (25) des Scharnierabschnitts (19) während der Überführung der Scharnieranordnung (11) zwischen dem normalen Zustand und dem eingesetzten Zustand translatorisch verschoben wird, wobei das Nutzungsführungselement (23) geeignet ist, die Überführung zu steuern, und die gelenkige Verbindung (A1) während der Überführung inaktiv ist.

2. Scharnieranordnung (11) nach Anspruch 1, wobei der Hubbegrenzer (37, 51) auf einen ersten Randabschnitt (24) des Nutzungsführungselements (23) wirkt.

3. Scharnieranordnung (11) nach einem der vorhergehenden Ansprüche, wobei das erste Element (25) des Scharnierabschnitts (19) ein Stützelement (51), z. B. einen Flansch, umfasst, der den Hubbegrenzer darstellt oder in diesem enthalten ist.

4. Scharnieranordnung (11) nach Anspruch 3, wobei das Stützelement (51) des ersten Elements (25) geeignet ist, ein Auflager für den Halterungsabschnitt (21) in dem normalen Zustand der Scharnieranordnung (11) bereitzustellen.

5. Scharnieranordnung (11) nach einem der vorhergehenden Ansprüche, wobei der Hubbegrenzer ein Arretierelement (37) darstellt oder umfasst, das drehbar an dem ersten Element (25) des Scharnierabschnitts (19) angebracht ist, wobei das Arretierelement (37) ein Auflagerelement (40) für das Nutzungsführungselement (23) umfasst, wobei das Auflagerelement (40) den Verschiebungsanschlag für das Nutzungsführungselement (23) bereitstellt.

6. Scharnieranordnung (11) nach Anspruch 5, ferner umfassend einen Basisabschnitt (35), der an dem zweiten Element (27) des Scharnierabschnitts (19) angebracht ist oder einen Teil des zweiten Elements (27) darstellt, wobei der Basisabschnitt (35) ein Anschlagelement (39) umfasst, wobei das Arretierelement (37) einen ersten Zweig (37a) umfasst, der geeignet ist, mit dem Anschlagelement (39), z. B. einem die Form eines Hakens (38) aufweisenden Abschnitt des ersten Zweigs (37a), zusammenzuwirken.

7. Scharnieranordnung (11) nach Anspruch 5 oder 6, wobei das Arretierelement (37) einen zweiten Zweig (37b) umfasst, wobei sich das Auflagerelement (40) für das Nutzungsführungselement (23) an dem zweiten Zweig (37b) befindet.

8. Scharnieranordnung (11) nach Anspruch 6 oder, bei Abhängigkeit von Anspruch 6, nach Anspruch 7, wobei das Arretierelement (37) und der Basisabschnitt (35) eine erste Verriegelungseinheit (33) darstellen oder in dieser enthalten sind, die einen verriegelten Zustand und einen geöffneten Zustand aufweist und die in dem verriegelten Zustand geeignet ist, das erste Element (25) des Scharnierabschnitts (19) in Bezug auf das zweite Element (27) des Scharnierabschnitts (19) zu verriegeln.

9. Scharnieranordnung (11) nach einem der vorhergehenden Ansprüche, umfassend eine zweite Verriegelungseinheit (41), die einen verriegelten Zustand und einen geöffneten Zustand aufweist und die geeignet ist, den Halterungsabschnitt (21) in Bezug auf das erste Element (25) des Scharnierabschnitts (19) zu verriegeln.

10. Scharnieranordnung (11) nach einem der vorhergehenden Ansprüche, ferner umfassend ein Hubelement (47), das geeignet ist, auf den Halterungsabschnitt (21) zu wirken, und dadurch die translatorische Verschiebung wenigstens in der vertikalen Richtung des Halterungsabschnitts (21) in Bezug auf das erste Element (25) des Scharnierabschnitts (19) während der Überführung der Scharnieranordnung (11) zwischen dem normalen Zustand und dem eingesetzten Zustand bereitstellt.

11. Scharnieranordnung (11) nach Anspruch 10 bei Abhängigkeit von Anspruch 9, wobei das Hubelement (47) geeignet ist, auf eine solche Weise auf die zweite Verriegelungseinheit (41) zu wirken, dass die zweite Verriegelungseinheit (41) auf Grund des Hubelements (47) aus dem verriegelten Zustand in den geöffneten Zustand wechselt.

12. Kühlerhaubenanordnung (1) für ein Fahrzeug (3), wobei die Kühlerhaubenanordnung (1) Folgendes umfasst:
- eine Kühlerhaube (5), die zwischen einer geschlossenen Stellung und einer genutzten Stellung, die im Vergleich zu der geöffneten Stellung wenigstens weiter oben gelegen ist, verschiebbar ist und
- eine Scharnieranordnung (11) nach einem der vorhergehenden Ansprüche, wobei der Halterungsabschnitt (21) der Scharnieranordnung (11) direkt oder indirekt an der Kühlerhaube (5) angebracht ist.

13. Fahrzeug, umfassend die Scharnieranordnung (11) nach einem der Ansprüche 1 bis 11 oder die Kühlerhaubenanordnung nach Anspruch 12.

## Revendications

1. Agencement de charnière (11) conçu pour être situé à une partie d'extrémité (15, 17) d'un capot (5) d'un véhicule (3),
ledit agencement de charnière (11) ayant une direction longitudinale (x), une direction transversale (y) et une direction verticale (z),
ledit agencement de charnière (11) pouvant passer entre un état normal et un état déployé,
ledit agencement de charnière (11) comprenant
une partie charnière (19) conçue pour être fixée, directement ou indirectement, à une carrosserie (13) dudit véhicule (3),
une partie de support (21) conçue pour être fixée, directement ou indirectement, audit capot (5), et
un élément de guidage de déploiement (23),
ladite partie charnière (19) comprenant un premier élément (25), un second élément (27) et un axe de pivotement de charnière (A1) fournissant une liaison articulée entre ledit premier élément (25) et ledit second élément (27),
ledit élément de guidage de déploiement (23) comprenant une première extrémité (29) reliée de façon pivotante à ladite partie de support (21) et une seconde extrémité (31) reliée de façon pivotante audit premier élément (25),
ladite partie de support (21) étant conçue pour être dans une position fixe par rapport audit premier élément (25) pendant le mouvement dans ladite liaison articulée (A1),
ledit agencement de charnière (11) comprenant en outre un limiteur de course (37, 51) conçu pour fournir une butée de déplacement pour ledit élément de guidage de déploiement (23) lorsque ledit agencement de charnière (11) a atteint ledit état déployé,
**caractérisé en ce que**
ladite partie de support (21) est conçue pour être déplacée en translation dans son ensemble au moins dans ladite direction verticale par rapport audit premier élément (25) de ladite partie charnière (19) pendant ladite transition dudit agencement de charnière (11) entre ledit état normal et ledit état déployé, ledit élément de guidage de déploiement (23) étant conçu pour commander ladite transition et ladite liaison articulée (A1) étant inactive pendant ladite transition.

2. Agencement de charnière (11) selon la revendication 1, ledit limiteur de course (37, 51) agissant sur une première partie de bord (24) dudit élément de guidage de déploiement (23).

3. Agencement de charnière (11) selon l'une quelconque des revendications précédentes, ledit premier élément (25) de ladite partie charnière (19) comprenant un élément de support (51), par exemple une bride, constituant ou étant compris dans ledit limiteur de course.

4. Agencement de charnière (11) selon la revendication 3, ledit élément de support (51) dudit premier élément (25) étant conçu pour fournir une butée pour ladite partie de support (21) dans ledit état normal dudit agencement de charnière (11).

5. Agencement de charnière (11) selon l'une quelconque des revendications précédentes, ledit limiteur de course constituant ou comprenant un élément de prise (37) fixé de manière pivotante audit premier élément (25) de ladite partie charnière (19), ledit élément de prise (37) comprenant un élément de butée (40) pour ledit élément de guidage de déploiement (23), ledit élément de butée (40) fournissant ladite butée de déplacement pour ledit élément de guidage de déploiement (23).

6. Agencement de charnière (11) selon la revendication 5 comprenant en outre une partie de base (35) fixée audit second élément (27) de ladite partie charnière (19) ou constituant une partie dudit second élément (27), ladite partie de base (35) comprenant un élément de butée (39), ledit élément de prise (37) comprenant une première branche (37a) conçue pour coopérer avec ledit élément de butée (39), par exemple une partie de ladite première branche (37a) ayant la forme d'un crochet (38).

7. Agencement de charnière (11) selon la revendication 5 ou 6, ledit élément de prise (37) comprenant une seconde branche (37b), ledit élément de butée (40) pour ledit élément de guidage de déploiement (23) étant situé au niveau de ladite seconde branche (37b) .

8. Agencement de charnière (11) selon la revendication 6, ou selon la revendication 7 lorsqu'elle dépend de la revendication 6, ledit élément de prise (37) et ladite partie de base (35) constituant ou étant compris dans une première unité de verrouillage (33) ayant un état verrouillé et un état ouvert et dans ledit état verrouillé étant conçue pour verrouiller ledit premier élément (25) de ladite partie charnière (19) par rapport audit second élément (27) de ladite partie charnière (19).

9. Agencement de charnière (11) selon l'une quelconque des revendications précédentes comprenant une seconde unité de verrouillage (41) ayant un état verrouillé et un état ouvert et étant conçue pour verrouiller ladite partie de support (21) par rapport audit premier élément (25) de ladite partie charnière (19) .

10. Agencement de charnière (11) selon l'une quelconque des revendications précédentes comprenant en outre un élément de levage (47) conçu pour fonctionner sur ladite partie de support (21), fournissant ainsi ledit déplacement de translation au moins dans ladite direction verticale de ladite partie de support (21) par rapport audit premier élément (25) de ladite partie charnière (19) pendant ladite transition dudit agencement de charnière (11) entre ledit état normal et ledit état déployé.

11. Agencement de charnière (11) selon la revendication 10 lorsqu'elle dépend de la revendication 9, ledit élément de levage (47) étant conçu pour fonctionner sur ladite seconde unité de verrouillage (41), de sorte que ladite seconde unité de verrouillage (41) passe dudit état verrouillé audit état ouvert par ledit élément de levage (47).

12. Agencement de capot (1) pour un véhicule (3), ledit agencement de capot (1) comprenant
un capot (5) pouvant être déplacé entre une position fermée et une position déployée située au moins vers le haut par rapport à ladite position fermée, et
un agencement de charnière (11) selon l'une quelconque des revendications précédentes,
ladite partie de support (21) dudit agencement de charnière (11) étant fixée, directement ou indirectement, audit capot (5).

13. Véhicule comprenant ledit agencement de charnière (11) selon l'une quelconque des revendications 1 à 11 ou ledit agencement de capot selon la revendication 12.
